# FASCICULE DE BREVET EUROPEEN

(11) **EP 1 240 627 B1**
(45) Date de publication et mention de la délivrance du brevet: **26.01.2005**
(21) Numéro de dépôt: 00990086.1
(22) Date de dépôt: 20.12.2000
(51) Int. Cl.: G07F 7/10, G07F 7/08

(54) **TERMINAL DE PAIEMENT PAR CARTE A PUCE**
ZAHLUNGSENDGERÄT FÜR CHIPKARTEN
SMART CARD PAYMENT TERMINAL

(30) Priorité: 23.12.1999 FR 9916422
(43) Date de publication de la demande: 18.09.2002
(73) Titulaire: SAGEM SA, 75116 Paris (FR)
(72) Inventeur: SARRADIN, Jean-Louis, F-95190 Fontenay en Parisis (FR)
(74) Mandataire: Schmit, Christian Norbert Marie
(86) Numéro de dépôt international: PCT/FR2000/003620
(87) Numéro de publication internationale: WO 2001/048707

(56) Documents cités:
- EP-A- 0 940 783
- EP-A- 0 965 938
- WO-A-99/08238
- FR-A- 2 778 302
- US-A- 5 387 784
- US-A- 5 811 770

## Description

La présente invention a pour objet un terminal de paiement par carte à puce utilisable principalement par des commerçants, notamment par des commerçants qui effectuent de nombreux déplacements.

Un terminal classique de paiement par carte à puce comporte un lecteur de carte à puce en relation avec un clavier, un écran de visualisation, un moyen de transmission (normalement un modem) et un microprocesseur qui gère l'interconnexion de ces différents périphériques.

Une opération de paiement avec un tel terminal se réalise de la manière suivante. Une carte à puce de type bancaire d'un client est introduite dans la fente du lecteur du terminal. Au cours de cette session il est ainsi demandé au porteur de la carte à puce de composer un code secret d'identification PIN sur le clavier du terminal. Ce code secret est transmis à la carte à puce qui vérifie que le code secret composé correspond à un code secret attendu. Par ailleurs d'autres opérations de sécurité peuvent être entreprises. Elles peuvent concerner notamment l'authentification de la carte à puce par le lecteur, ainsi que l'authentification du lecteur par la carte à puce. Ces authentifications permettent à chacun des deux organes respectivement de vérifier que l'organe avec lequel ils sont en relation est un organe authentique et non pas un organe falsifié.

Une fois que ces opérations préliminaires ont été effectuées, ou préalablement, le terminal de paiement permet de composer un message de paiement. Ce message de paiement comporte essentiellement une indication d'un montant, une indication d'identité d'un débiteur et une indication d'identité d'un créancier. L'indication du montant est composée par le commerçant sur le clavier, de préférence préalablement à l'opération de vérification. De ce fait, l'opération de vérification du détenteur de la carte à puce vaut en même temps accord sur le paiement. Le fait de composer son code secret devient en soi un acte d'acquiescement de payer. L'identité du débiteur est prélevée, notamment au cours des opérations préliminaires de vérification, dans la carte à puce. Les indications relatives au débiteur peuvent concerner un numéro de série de sa carte à puce. Ce numéro permet dans un organisme financier de retrouver son numéro de compte bancaire. Ou bien cette identité est le numéro de compte bancaire lui-même, crypté ou non, assorti de codes de cohérence ou non. L'identité du commerçant créancier est prélevée normalement dans le terminal de paiement remis au commerçant par son organisme financier. Nanti de ces trois informations, et en cas de composition correcte du code secret, le terminal compose le message de paiement. Ce message est en pratique une suite numérique, au moins stockée dans une mémoire de travail du terminal.

Une fois que le message de paiement est composé, le terminal peut procéder à son envoi à un circuit de collecte de messages de paiement de son organisme financier. Cet envoi est réalisé par un modem contenu dans le terminal. Cet envoi peut être en temps réel ou en temps différé. Il est en temps réel lorsque le montant de la transaction est supérieur à un montant limite, ou lorsque le type de la carte à puce du débiteur introduite dans le lecteur l'impose, ou pour tout autre raison, par exemple lorsque le nombre de transactions effectuées avec le lecteur devient supérieur à un certain nombre. Lorsque l'envoi est effectué en temps réel, l'organisme financier transmet en retour un message de prise en compte du paiement, ou de refus de prise en compte. Ce message de prise en compte est chiffré et est stocké en correspondance du message de paiement dans une mémoire de stockage du terminal. Pour les envois en temps différé, effectués en général la nuit, tous les messages de paiement collectés dans la journée par un terminal de paiement sont transmis à l'organisme financier qui les exécute, sans possibilité de refus.

Globalement un paiement par carte à puce est très sécurisant pour le créancier. Un tel créancier a donc naturellement tendance à privilégier un paiement réalisé de cette façon à toute autre forme de paiement, éventuellement même au paiement en liquide car il ne risque pas de se faire voler les sommes qui lui ont été payées.

Lorsqu'un commerçant est en déplacement il est alors prévu de remplacer le modem par un appareil susceptible d'entrer en relation avec l'organisme financier par l'intermédiaire d'un réseau de téléphonie mobile. Le fonctionnement d'un tel terminal mobile est alors similaire à celui d'un terminal classique de paiement par carte à puce, hormis le fait que la transmission s'effectue par un réseau de téléphonie mobile. Les informations échangées dans ce cas sont échangée selon un mode de données, voire par des transmissions de type SMS (Short Message Service - service de messages courts).

Ce mode de transmission présente toutefois un inconvénient. En effet en plus du prix du terminal mobile lui-même, le coût des communications de téléphonie mobile est élevé. Même se ces communications sont courtes, elles conduisent à une augmentation sensible des frais de fonctionnement du commerçant.

Pour résoudre ce problème de prix, un tel commerçant est alors amené à devoir acquérir en plus de son terminal mobile un terminai fixe relié au réseau téléphonique commuté avec lequel il réalise les transactions lorsqu'il est dans son magasin. Dans certains commerces, le coût d'un terminal dont la technologie change fréquemment est une charge difficilement acceptable, a fortiori s'il faut en acheter deux. Par ailleurs pour les entreprises utilisant les services de voyageurs représentant placiers le nombre de machines doubles augmente avec le nombre de ses représentants.

L'invention permet de résoudre ce problème de coût en prévoyant un terminal mobile capable de sélectionner au choix un mode de transmission parmi au moins deux modes de transmission possibles. Un premier mode de transmission possible est alors un mode de transmission par un réseau de téléphonie mobile, l'autre mode étant un mode de transmission par réseau téléphonique commuté, moins cher. Dans une version préférée, pour assurer la transmission par un réseau de téléphonie commutée, réseau public, le terminal de paiement sera associé à une station de base privée. Dans ce cas le terminal mobile sera capable d'émettre des émissions radioélectriques à destination du réseau de téléphonie mobile public quand il ne pourra pas émettre des émissions radioélectriques à destination de sa station de base privée. Notamment dans ce cas le terminal mobile sera un terminal conforme à une norme du type de la norme DECT, et pourvu en particulier de tous les perfectionnements dont disposent les appareils de ce type.

Une solution de ce type est connue de la demande de brevet européen 99947534.6 publiée le 20.04.2000, après la date de priorité de la présente invention, sous le n° WO-A-0022582. Cette solution n'est cependant pas assez robuste vis à vis des fraudes. Dans l'invention, on prévoit de mieux sécuriser le message de paiement.

Ces perfectionnements comporteront notamment une sélection automatique d'un mode transmission préféré. Ce mode préféré pourra bien entendu être de préférence le mode de téléphonie commuté pour lequel le coût de transmission est faible. La sélection automatique peut se réaliser d'une manière habituelle par interrogation systématique provenant de la base pour savoir si le terminal mobile est dans son environnement radioélectrique. S'il l'est le terminal mobile se signale à la base et en même temps commute son utilisation.

Au besoin dans des modes d'utilisation dits Home Service - service à domicile, il peut être prévu que le terminal mobile continue à utiliser le réseau de téléphonie mobile, mais à un tarif préférentiel pour les communications de messages de paiement, ce tarif préférentiel étant tout à fait comparable au tarif faible du réseau téléphonique commuté. Dans ce cas la base privée prévient le réseau de téléphonie mobile et ou le réseau téléphonique commuté d'avoir à détourner les appels à destination de ce terminal mobile sur le numéro de téléphonie commuté ou réciproquement. En agissant ainsi, l'appareil de l'invention procure alors un double service, celui de laisser disponible la ligne de téléphone privée du commerçant tout en lui octroyant la réduction tarifaire attendue.

L'invention a donc pour objet un terminal de paiement par carte à puce comportant des moyens pour produire un message de paiement, des moyens pour transmettre ce message de paiement à un organisme financier, les moyens pour transmettre comportant des moyens de sélectionner un mode de transmission parmi plusieurs modes, et un circuit de sécurité d'édition de message de paiement.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1 : une représentation schématique du terminal de paiement de l'invention et de son environnement pour aboutir à l'utilisation préférée ;
- Figure 2 : un organigramme d'opérations à mettre en oeuvre dans le terminal de paiement pour accueillir toutes les facilités offertes.

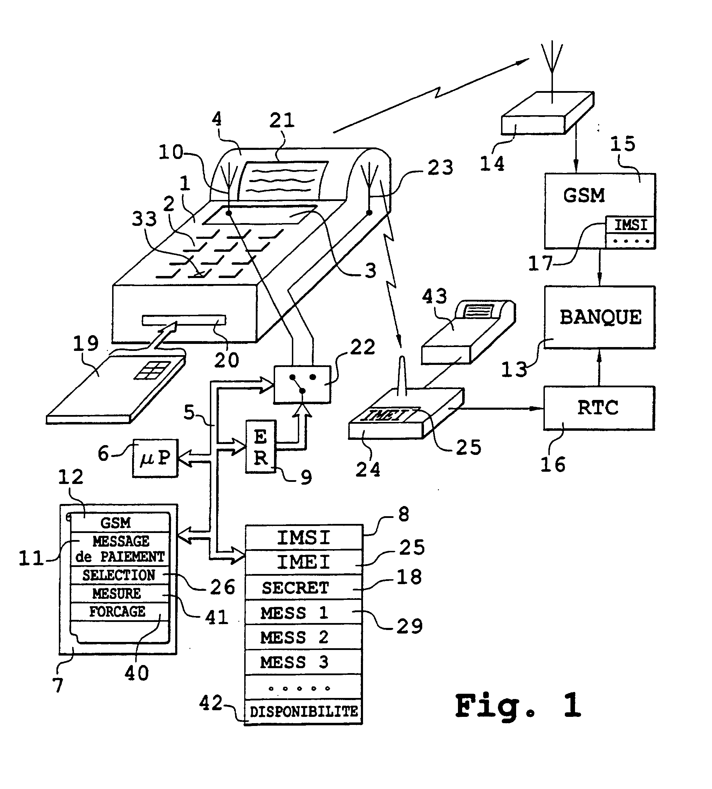

La figure 1 montre un terminal 1 de paiement par carte à puce selon l'invention. Ce terminal 1 comporte principalement un boîtier 1 muni d'une manière classique d'un clavier 2, d'un écran 3, d'une imprimante 4 reliés ensemble par l'intermédiaire d'un bus 5 à un microprocesseur 6, à une mémoire programme 7 et à une mémoire non volatile de données 8. Un tel terminal de paiement muni de moyens 9 d'émission réception radioélectrique est connu. Ces moyens 9 sont reliés à une antenne d'émission 10 symbolisant des étages terminaux des circuits d'émission réception 9. Un tel terminal de paiement 1 sait éditer avec un programme 11 contenu dans la mémoire 7 un message de paiement et sait transmettre avec un programme 12 de transmission ces messages de paiement aux circuits d'un organisme financier 13. Un mode de transmission radioélectrique, en particulier dans le cadre d'une application de type GSM, Global System for Mobile - Système Globale de Téléphonie Mobile, implique la participation de stations de base publiques 14 avec lesquelles le terminal mobile 1 peut entrer en relation.

Ces stations de base 14 sont reliés à un réseau 15 de téléphonie mobile. Dans la pratique la liaison des stations de base 14 au réseau 15 peut emprunter les lignes d'un réseau téléphonique commuté 16. Les stations de base publiques 14 se caractérisent par le prélèvement dans la mémoire 8 des terminaux mobiles qui entrent en communication avec elles, au cours des communications qu'elles acheminent, d'un numéro dit IMSI, International Mobile Subscriber Identification - identification internationale d'abonnés de téléphonie mobile, et par comparaison de ces numéros IMSI avec des numéros IMSI mémorisés dans une mémoire 17 des circuits du réseau 15. Cette identification d'abonnement IMSI permet ainsi aux organes de gestion du réseau 15 d'acheminer les communications du terminal mobile 1, et surtout d'en facturer le coût au titulaire de l'abonnement.

Sur le plan pratique le numéro IMSI, plutôt que d'être mémorisé dans une mémoire 8 du terminal 1, peut être mémorisé dans un circuit de sécurité complémentaire, non représenté, en communication avec le bus 5. Dans le cadre de terminaux mobiles 1 de paiement par carte à puce ce circuit de sécurité d'abonnement coopère, ou est directement combiné, avec un circuit de sécurité d'édition de messages de paiement. Ce circuit de sécurité d'édition de messages de paiement utilise pour les opérations de vérification, d'acquit du message de paiement et d'authentification, des zones 18 de code secret de la mémoire 8.

Dans l'état de la technique, un tel terminal de paiement fonctionne d'une manière attendue. Une carte à puce 19 d'un client débiteur est introduite dans un lecteur 20 en relation avec le bus 5. Le programme 11 exécuté par le microprocesseur 6 fait dérouler les opérations de paiement et, à l'issue, déclenche une session du programme 12 pour entrer en communication par l'intermédiaire de la station de base 14 avec les circuits de la banque 13. Le message de paiement est alors traité, éventuellement accepté ou refusé, et la station de base 14 transmet au terminal 1 qui imprime avec l'imprimante 4 une facturette 21 représentant la transaction effectuée et que le commerçant peut remettre au client.

Dans l'invention on agit différemment. On interpose dans le terminal 1, dans la voie de transmission, un circuit de sélection 22 qui permet de sélectionner un mode de transmission. Tel que schématiquement représenté, ce circuit de sélection 22 peut, en sortie du circuit d'émission réception 9 mettre en oeuvre un autre circuit d'émission 23 représenté symboliquement par une antenne en lieu et place du circuit 10. Le circuit 23 tend à faire entrer le terminal mobile 1 en relation avec une station de base privée 24. Une station de base privée 24 fonctionne globalement comme une station de base publique 14 en relation avec un réseau de téléphonie mobile 15.

Pour que le terminal 1 puisse fonctionner avec la station de base privée 24, au cours d'une session d'association préalable (faite une seule fois dans la vie du terminal 1), le terminal mobile 1 transmet à la station de base privée 24 son numéro IMEI 25, international Mobile Equipment Identity - identité internationale de l'équipement mobile. En clair ce numéro IMEI caractérise beaucoup plus le terminal mobile 1 que l'abonnement IMSI de son détenteur auprès d'un réseau de téléphonie mobile 15. Au cours de cette session d'association, le terminal mobile 1 signale à la station de base privée 24 qu'il est susceptible d'être en relation avec elle. Au cours de cette session d'association, celle-ci l'accepte comme un des interlocuteurs possibles. Cette association conduit, lors de communications entre le terminal 1 et la station de base privée 24 à l'établissement de protocoles de communication comportant des adressages, des désignations de fréquence, des synchronisations temporelles, des assignations de puissance d'émission et ainsi de suite. La station de base privée 24 est par ailleurs en liaison, par l'intermédiaire du réseau téléphonique commuté 16 avec les services 13 de l'organisme financier auxquels doivent être acheminés les messages de paiement. La station de base privée 24 peut comporter à cet effet un modem. La station de base privée 24 est classique de ce point de vue.

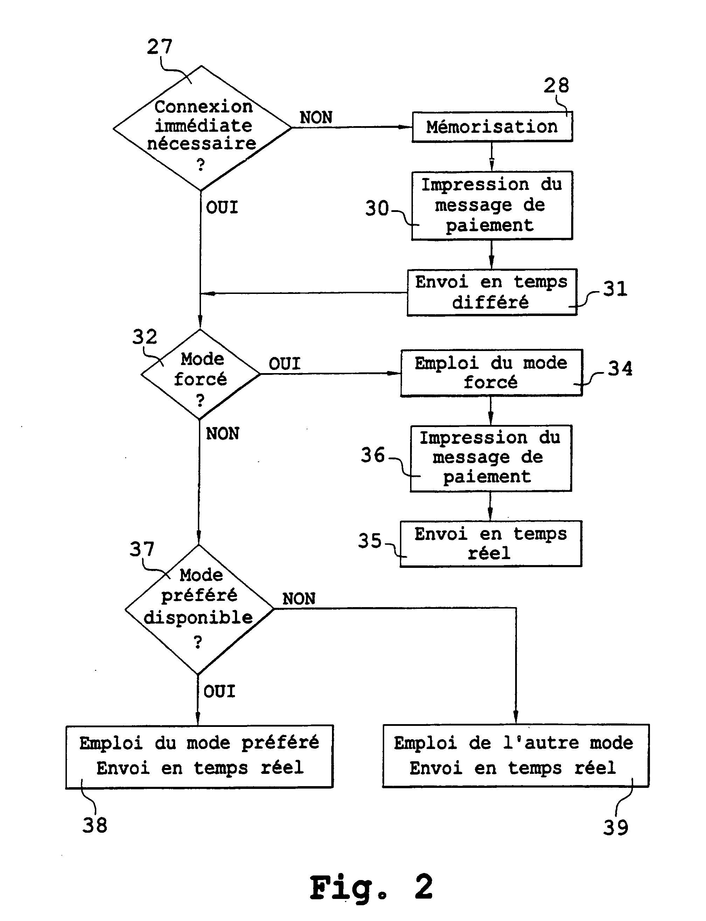

La particularité essentielle de l'invention se situe donc dans la présence des moyens 22 de sélection du mode de transmission. La représentation des moyens 22 est toutefois ici schématique. En effet, sur la figure 2 sont indiquées des particularités préférées de l'édition et de la transmission d'un message de paiement avec le terminal 1. Lorsque le terminal 1 est en utilisation et qu'un message de paiement a été composé selon le programme 11, un programme de sélection 26, représenté figure 2, comporte alors un premier test 27 pour savoir si la connexion entre le terminal 1 et l'organisme 13 est immédiatement nécessaire. Celle-ci est immédiatement nécessaire si le montant de la transaction est supérieure à une limite, ou si la carte de paiement 19 nécessite la vérification de chaque opération.

Si cette connexion immédiate n'est pas nécessaire, le programme 26 lance alors une opération 28 de mémorisation et le message de paiement est mémorisé à un emplacement 29 de la mémoire 8 (ou autre). Puis, ou préalablement, le programme 26 provoque une impression 30 du message du paiement pour que le débiteur puisse avoir une trace du montant qu'il a payé (même s'il ne sait pas que le message de paiement n'a pas encore été transmis à la banque). Une opération 31 d'envoi en temps différé du message de paiement se produit ensuite.

Cet envoi 31 en temps différé, ou l'envoi en temps réel en cas de connexion nécessaire immédiate conduisent à un deuxième test 32 au cours duquel le programme 26 cherche à savoir si le terminal 1 est en mode de transmission forcé ou non. Ce mode de transmission forcé peut par exemple être réalisé en appuyant sur une touche spéciale 33 du clavier 2, ou sur une combinaison de touches du terminal. Ce mode forcé peut par ailleurs bien entendu avoir été choisi au préalable, dans un menu d'utilisation du programme de sélection 26, voire de l'édition des messages de paiement 11. Si un mode forcé a été imposé, ce mode forcé sera employé au cours d'une étape 34 pour envoyer le message de paiement au cours d'une étape 35 et éventuellement imprimer le message de paiement au cours d'une étape 36 s'il n'a pas déjà été imprimé au cours d'une étape 30.

Le mode forcé peut être n'importe lequel des deux modes : le mode de transmission par le réseau de téléphonie mobile public, ou le mode utilisant la station de base 24 et le réseau téléphonique commuté 16. On pourra par ailleurs prévoir que le mode forcé ne puisse être qu'un seul de ces modes, de préférence le mode utilisant le réseau téléphonique commuté 16 avec ses tarifs de transmission moins élevés. Dans ce cas il pourra être impossible, si le terminal mobile 1 est trop éloigné de la station de base 24, que le message soit transmis. Dans ce cas les étapes 35 et 36 ne se produiront pas et un échec correspondant sera affiché sur l'écran 3.

Si le mode n'est pas forcé, le programme 26 prévoit encore de préférence un test 37 au cours duquel un mode de transmission préféré peut être choisi. Par exemple le mode de transmission préféré peut être le mode de transmission utilisant le réseau téléphonique commuté 16. Soit ce mode est disponible, et au cours d'une étape 38 il est employé. Au cours de l'étape 38 comme au cours de l'étape 35 peut succéder une étape d'impression du message de paiement si celui-ci n'a pas déjà été imprimé. Si le test montre que le mode préféré de transmission n'est pas disponible, au cours d'une étape 39 l'autre mode, ou bien un des autres modes si plusieurs autres modes sont prévus, est employé.

Le test 32 résultant d'un mode forcé résultera de l'exécution d'un programme 40 mémorisé dans la mémoire programme 7. Le test 37 résultera d'un programme 41 de mesure de la disponibilité du mode préféré de transmission. Cette mesure 41 peut comporter des émissions périodiques par la station de base 24 adressées au terminal 1 et tendant à rafraîchir dans ce terminal 1 une indication 42 de disponibilité de la liaison avec la station de base 24. Ou éventuellement le programme 41 comportera une tentative d'établissement d'une communication avec la station de base 24 et, si celle-ci ne réussit pas, au bout d'une temporisation l'autre mode pourra être préféré. Dans le cas d'une indication de disponibilité avec des messages émanant de la station de base 24, le programme 41 peut prévoir une temporisation d'annulation de cette indication de disponibilité si elle n'est pas rafraîchie suffisamment fréquemment. Les messages échangés à cet effet entre la station de base privée 24 et le terminal 1 sont du type de ceux échangés entre un téléphone mobile et une station de base privée, notamment un téléphone mobile de type DECT, dans lesquelles les communications sont numériques. Sur le plan pratique les moyens de mesure 41 correspondront à une détectabilité radioélectrique de la présence du terminal 1 dans l'environnement de la station de base privée 24. Ceci peut être réalisé par tout autre moyen, notamment l'action sur un commutateur de la station 24, voire le dépôt du terminal 1 directement dur cette station 24.

Lorsque la communication n'a pas été immédiatement nécessaire, les messages se sont empilés en zone 29 de la mémoire 8. Dans ce cas, une fois rendu à proximité de la station de base 24, le détenteur du terminal 1 peut provoquer l'envoi 31 en temps différé en lançant le test 32 et la suite des opérations décrites. Dans ce cas la station de base 24 peut être en relation avec une imprimante annexe 43 à moins que l'imprimante 4 joue ce rôle pour lui signaler que les messages de paiement sont effectivement transmis à la banque 13.

Dans l'utilisation de type Home Service, physiquement le mode de transmission reste le même, mais les conséquences tarifaires changent. La détection du mode Home Service est de ce point de vue, en soi, un autre mode de transmission du message de paiement.

## Revendications

1. Terminal de paiement par carte à puce comportant des moyens pour produire un message de paiement, des moyens pour transmettre ce message de paiement à un organisme financier, les moyens pour transmettre comportant des moyens de sélectionner un mode de transmission parmi plusieurs modes, et un circuit de sécurité d'édition de messages de paiement.

2. Terminal selon la revendication 1, **caractérisé en ce que** les moyens pour sélectionner comportent des moyens pour mesurer que le terminal se trouve dans la dépendance d'une station de base d'un réseau de téléphonie privé.

3. Terminal selon la revendication 2, **caractérisé en ce que** les moyens pour mesurer comportent une détection radioélectrique de la position du terminal par rapport à la position de la station de base privée.

4. Terminal selon l'une des revendications 1 à 3, **caractérisé en ce que** les moyens pour sélectionner comportent des moyens pour forcer un mode de transmission parmi plusieurs modes.

5. Terminal selon l'une des revendications 1 à 4, **caractérisé en ce que** les moyens pour sélectionner comportent des moyens pour employer en préférence un des modes de transmission et pour employer l'autre mode en cas d'échec.

6. Terminal selon l'une des revendications 1 à 5, **caractérisé en ce qu'**un mode de transmission est un mode de transmission sur un réseau public de téléphonie mobile et l'autre mode un mode avec transmission vers un réseau privé de téléphonie mobile.

7. Terminal selon l'une des revendications 1 à 6, **caractérisé en ce qu'**il comporte des moyens pour mémoriser plusieurs messages de paiement quand il est dans un mode de transmission donné, et des moyens pour transmettre en temps différés les messages mémorisés.

8. Terminal selon la revendication 7, **caractérisé en ce que** les moyens de transmettre en temps différé utilisent un mode avec transmission vers un réseau privé de téléphonie mobile.

## Patentansprüche

1. Zahlungsendgerät für Chipkarten, das Mittel umfasst, um eine Zahlungsmeldung zu erzeugen, Mittel zum Übertragen dieser Zahlungsmeldung an ein Finanzinstitut, wobei die Mittel zum Übertragen Mittel zum Auswählen eines Übertragungsmodus aus mehreren Modi und eine Sicherheitsschaltung zum Editieren von Zahlungsmeldungen umfasst.

2. Zahlungsendgerät nach Anspruch 1, **dadurch gekennzeichnet, dass** die Mittel zum Auswählen Mittel umfassen, um zu messen, ob sich das Zahlungsendgerät in der Abhängigkeit von einer Basisstation eines privaten Telefonnetzes befindet.

3. Zahlungsendgerät nach Anspruch 2, **dadurch gekennzeichnet, dass** die Mittel zum Messen eine Funkerfassung der Position des Zahlungsendgeräts in Bezug zur Position der privaten Basisstation umfassen.

4. Zahlungsendgerät nach einem der Ansprüche 1 bis 3, **dadurch gekennzeichnet, dass** die Mittel zum Auswählen Mittel umfassen, um einen von mehreren Übertragungsmodi zu forcieren.

5. Zahlungsendgerät nach einem der Ansprüche 1 bis 4, **dadurch gekennzeichnet, dass** die Mittel zum Auswählen Mittel umfassen, um vorzugsweise einen der Übertragungsmodi zu verwenden und um den anderen Übertragungsmodus im Versagensfall zu verwenden.

6. Zahlungsendgerät nach einem der Ansprüche 1 bis 5, **dadurch gekennzeichnet, dass** ein Übertragungsmodus ein Übertragungsmodus auf einem öffentlichen Mobiltelefonnetz ist und der andere Übertragungsmodus ein Modus mit Übertragung zu einem privaten Mobiltelefonnetz ist.

7. Zahlungsendgerät nach einem der Ansprüche 1 bis 6, **dadurch gekennzeichnet, dass** es Mittel zum Speichern mehrerer Zahlungsmeldungen umfasst, wenn es sich in einem bestimmten Übertragungsmodus befindet, und Mittel zur verzögerten Übertragung der gespeicherten Meldungen.

8. Zahlungsendgerät nach Anspruch 7, **dadurch gekennzeichnet, dass** die Mittel zum verzögerten Übertragen einen Modus mit Übertragung zu einem privaten Mobiltelefonnetz verwenden.

## Claims

1. Smart-card payment terminal including means for producing a payment message, means for transmitting this payment message to a financial organisation, the transmission means including means for selecting a transmission mode from a plurality of modes and a security circuit for issuing payment messages.

2. Terminal as described in claim 1, **characterised by** the fact that the selection means include means for determining whether the terminal is dependent on a base station of a private telephony network.

3. Terminal as described in claim 2, **characterised by** at the fact that the determining means include radioelectric detection of the position of the terminal relative to the position of the private base station.

4. Terminal as described in one of claims 1 to 3, **characterised by** the fact that the selection means include means for forcing one transmission mode from a plurality of modes.

5. Terminal as described in one of claims 1 to 4, **characterised by** the fact that the selection means include means for preferably using one of the transmission modes and for using the other mode in case of failure.

6. Terminal as described in one of claims 1 to 5, **characterised by** the fact that one transmission mode is a mode for transmission on a public mobile telephony network and the other mode a mode with transmission to a private mobile telephony network.

7. Terminal as described in one of claims 1 to 6, **characterised by** the fact that it includes means for storing a plurality of payment messages when it is in a given transmission mode, and means for transmitting the stored messages in delayed time.

8. Terminal as described in claim 7, **characterised by** the fact that the means for transmission in delayed time use a mode with transmission to a private mobile telephony network.
